# EUROPÄISCHE PATENTSCHRIFT

(11) **EP 1 870 258 B1**
(45) Veröffentlichungstag und Bekanntmachung des Hinweises auf die Patenterteilung: **02.11.2011**
(21) Anmeldenummer: 07106903.3
(22) Anmeldetag: 25.04.2007
(51) Int. Cl.: B60C 11/11, B60C 11/13

(54) **Fahrzeugreifen**
Vehicle tyre
Pneu

(30) Priorität: 24.06.2006 DE 102006029048
(43) Veröffentlichungstag der Anmeldung: 26.12.2007
(73) Patentinhaber: Continental Reifen Deutschland GmbH, 30165 Hannover (DE)
(72) Erfinder: Fischer, Markus, 30823, Garbsen (DE)
(74) Vertreter: Finger, Karsten

(56) Entgegenhaltungen:
- JP-A- 3 273 905
- JP-A- 9 142 105
- JP-A- 2002 036 822
- JP-A- 2003 063 213
- US-A1- 2001 032 691

## Beschreibung

### Beschreibung

Die Erfindung betrifft einen Fahrzeugreifen mit profiliertem Laufstreifen mit durch Profilrillen voneinander getrennten radial erhabenen Profilelementen mit jeweils mindestens einer Rillenwand, die sich aus dem Rillengrund nach radial außen bis zu einer das Profilelement nach radial außen begrenzenden Mantelfläche erstreckt und eine Flanke eines an die Profilrille angrenzenden erhabenen Profilelementes bildet, wobei die Flanke einen radial inneren Erstreckungsbereich und einen radial äußeren Erstreckungsbereich aufweist, wobei jeweils in den Schnittebenen senkrecht zur Längserstreckungsrichtung der Profilrille der zwischen Rillenflanke und radialer Richtung eingeschlossene Winkel im radial äußeren Erstreckungsbereich größer ist als im radial inneren Erstreckungsbereich.

Übliche Fahrzeugreifen sind mit einem profiliertem Laufstreifen mit durch Profilrillen voneinander getrennten radial erhabenen Profilelementen ausgebildet, wobei die Rillenwände sich jeweils aus dem Rillengrund nach radial außen bis zu einer das Profilelement nach radial außen begrenzenden Mantelfläche erstrecken. Die Rillenwände bilden dabei jeweils Flanken der die Profilrille begrenzenden erhabenen Profilelemente. Beim Fahren bewirken dynamische Kräfte, die senkrecht zur Rillenwand gerichtet sind, ein Einrollen der zwischen Rillenwand und radial nach außen begrenzenden Mantelfläche gebildeten Kante und eine hierdurch unerwünschte Deformation des erhabenen Profilelements mit der Folge undefinierter, reduzierter Krafteinleitung zwischen Straßenoberfläche und erhabenem Profilelement. Dies kann beispielsweise die Bremswirkung auf trockener Straße reduzieren.

Aus der EP1074405A1 ist es bekannt, Fahrzeugreifen mit einem profiliertem Laufstreifen mit durch Profilrillen voneinander getrennten radial erhabenen Profilelementen auszubilden, bei dem Rillenwände, die sich aus dem Rillengrund nach radial außen bis zu einer das Profilelement nach radial außen begrenzenden Mantelfläche erstrecken und die jeweils eine Flanke eines an die Profilrille angrenzenden erhabenen Profilelementes bilden, mit einem radial inneren und mit einem radial äußeren Erstreckungsbereich auszubilden. Im radial inneren Erstreckungsbereich hat die Rillenwand eine Erstreckung in rein radialer Richtung. Im radial äußeren Erstreckungsbereich bildet sie einen kantenlosen fließenden, gekrümmten Übergang zwischen dem ersten Erstreckungsbereich und der nach radial außen begrenzenden Mantelfläche. Hierdurch werden aufgrund Einrolleffekte reduziert. Die Krafteinleitung kann hierdurch vergleichmäßigt werden. Allerdings unter vollständigem Verzicht auf Griffkanten. Trotz Vergleichmäßigung der Kraftübertragung zwischen der nach radial außen begrenzenden Mantelfläche und der Straßenoberfläche wird hierdurch der Griff der erhabenen Profilelemente auf nasser, schnee- oder eisbedeckter Fahrbahn weiter reduziert.

Dokument JP 200236822 offenbart einen Reifen nach dem Oberbegriff von Anspruch 1.

Der Erfindung liegt die Aufgabe zugrunde, einen Fahrzeugreifen mit profiliertem Laufstreifen mit durch Profilrillen voneinander getrennten radial erhabenen Profilelementen mit jeweils mindestens einer Rillenwand, die sich aus dem Rillengrund nach radial außen bis zu einer das Profilelement nach radial außen begrenzenden Mantelfläche erstreckt und eine Flanke eines an die Profilrille angrenzenden erhabenen Profilelementes bildet, wobei die Flanke einen radial inneren Erstreckungsbereich und einen radial äußeren Erstreckungsbereich aufweist, wobei jeweils in den Schnittebenen senkrecht zur Längserstreckungsrichtung der Profilrille der zwischen Rillenflanke und radialer Richtung eingeschlossene Winkel im radial äußeren Erstreckungsbereich größer ist als im radial inneren Erstreckungsbereich, zu schaffen, bei dem trotz gleichmäßiger Krafteinleitung zwischen radial nach außen gerichteter Mantelfläche eine hohe Kraftübertragung auf nasser, schnee- oder eisbedeckter Fahrbahn ermöglicht wird.

Erfindungsgemäß wird die Aufgabe durch die Ausbildung eines Fahrzeugreifens mit profiliertem Laufstreifen mit durch Profilrillen voneinander getrennten radial erhabenen Profilelementen mit jeweils mindestens einer Rillenwand, gemäß den Merkmalen von Anspruch 1 gelöst. Trotz der Reduktion der Einrollgefahr durch die Ausbildung des radial äußeren Erstreckungsbereichs mit gegenüber dem radial inneren Erstreckungsbereich größerem eingeschlossenem Winkel zur Radialen sind in dem zwischen radial innerem Erstreckungsbereich und der nach radial außen das Profilelement begrenzenden Mantelfläche ausgebildeten Übergang aus radial äußerem Erstreckungsbereich parallel zur Profilrille durch die linienförmigen Profilierungen zusätzliche Griffkanten ausgebildet. Die linienförmigen Profilierungen bilden nicht nur zusätzliche und somit die Summe erhöhende Griffkanten, sondern Griffkanten, die jede für sich durch die reduzierten Einrolleffekte in ihrer Wirkung auch kaum eingeschränkt werden. Die Profilelementflanken können somit senkrecht zu ihrer Flankenfläche erhöhten Griff auf nasser, schnee- oder eisbedeckter Straßenoberfläche entfalten.

Besonders vorteilhaft ist die Ausbildung eines Fahrzeugreifens gemäß den Merkmalen von Anspruch 2, bei der beide eine Profilrille begrenzenden Rillenwände jeweils Profilelementflanken bilden, die mit einem radial inneren und einem radial äußeren Erstreckungsbereich ausgebildet sind, bei dem im radial äußeren Erstreckungsbereich jeweils linienfömige Profilierungen ausgebildet sind, deren linienförmige Erstreckung im wesentlichen parallel zur Längserstreckung der Profilrille ausgerichtet ist, und bei dem im radial inneren Erstreckungsbereich keine linienfömigen Profilierungen ausgebildet sind, deren linienförmige Erstreckung im wesentlichen parallel zur Längserstreckung der Profilrille ausgerichtet ist. Hierdurch kann der Zielkonflikt von Trockentraktion - Nasstraktion weiter verbessert gelöst werden.
Besonders vorteilhaft ist die Ausbildung eines Fahrzeugreifens gemäß den Merkmalen von Anspruch 3, bei der der Übergang zwischen radial innerem und radial äußerem Erstreckungsbereich in den Schnittebenen senkrecht zur Längserstreckungsrichtung der Profilrille knickförmig ausgebildet ist. Hierdurch kann die Trockenbremseigenschaft weiter verbessert werden.

Besonders vorteilhaft ist die Ausbildung eines Fahrzeugreifens gemäß den Merkmalen von Anspruch 4, bei der die linienförmigen Profilierungen mehrere in radialer Richtung nebeneinander angeordnete parallele linienförmige Erhebungen und /oder Vertiefungen sind. Hierdurch kann der Zielkonflikt von Trockentraktion - Nasstraktion weiter verbessert gelöst werden.

Besonders vorteilhaft ist die Ausbildung eines Fahrzeugreifens gemäß den Merkmalen von Anspruch 5, bei der die linienförmigen Profilierungen Rippen und/oder Stufen und/oder Rillen und/oder Feineinschnitte sind. Hierdurch kann der Zielkonflikt von Trockentraktion - Nasstraktion weiter verbessert gelöst werden.

Besonders vorteilhaft ist die Ausbildung eines Fahrzeugreifens gemäß den Merkmalen von Anspruch 6, bei der der in den Schnittebenen senkrecht zur Längserstreckungsrichtung der Profilrille der zwischen Rillenflanke und radialer Richtung eingeschlossene Winkel α im radial äußeren Erstreckungsbereich größer oder gleich 30° und kleiner oder gleich 60° ist. Hierdurch kann die Trockenbremseigenschaft weiter verbessert werden.

Besonders vorteilhaft ist die Ausbildung eines Fahrzeugreifens gemäß den Merkmalen von Anspruch 7, bei der der in den Schnittebenen senkrecht zur Längserstreckungsrichtung der Profilrille der zwischen Rillenflanke und radialer Richtung eingeschlossene Winkel α im radial äußeren Erstreckungsbereich größer oder gleich 40° und kleiner oder gleich 50° , mit insbesondere α = 45° ist..

Besonders vorteilhaft ist die Ausbildung eines Fahrzeugreifens gemäß den Merkmalen von Anspruch 8, bei der das Maß rₐ der radialen Erstreckung des radial äußeren Erstreckungsbereiches maximal 2mm beträgt. Hierdurch kann die Trockenbremseigenschaft weiter verbessert werden.

Besonders vorteilhaft ist die Ausbildung eines Fahrzeugreifens gemäß den Merkmalen von Anspruch 9, bei der die Profilrille eine im Wesentlichen in Umfangsrichtung über den Umfang des Fahrzeugreifens erstreckte Umfangsrille ist. Hierdurch ist eine verbesserte Seitenführung möglich.

Besonders vorteilhaft ist die Ausbildung eines Fahrzeugreifens gemäß den Merkmalen von Anspruch 10, bei der die Profilrille eine Querrille ist. Hierdurch kann die Traktion weiter verbessert werden.

Die Erfindung wird im Folgenden an Hand der in den Figuren 1 bis 6 dargestellten Ausführungsbeispiele näher erläutert. Dabei zeigen
- Fig. 1: Draufsicht auf einen Umfangsabschnitt eines Reifenprofils eines Fahrzeugluftreifens,
- Fig. 2: Draufsicht auf ein Profilblockelement von Fig. 1 in vergrößerter Darstellung zur Erläuterung der Ausbildung der Profilblockflanke,
- Fig. 3: Profilblockelement von Fig. 2 in Schnittdarstellung III-III von Fig. 2,
- Fig. 4: Profilblockelement von Fig. 2 in Schnittdarstellung IV-IV von Fig. 2,
- Fig. 5: Darstellung gemäß Fig. 4 mit alternativer Ausbildung der Profilblockflanke,
- Fig. 6: Darstellung gemäß Fig. 4 mit weiterer alternativer Ausbildung der Profilblockflanke.

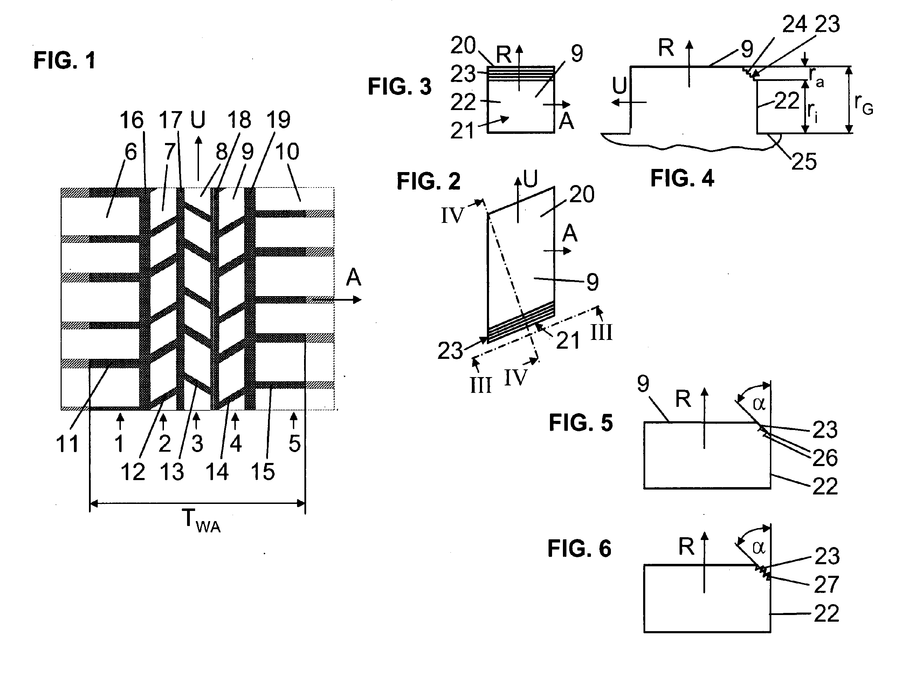

Figur 1 zeigt einen Umfangsabschnitt eines Laufflächenprofils eines Fahrzeugluftreifens in Draufsicht. Eingetragen ist die Umfangsrichtung U sowie die axiale Richtung A des Fahrzeugluftreifens sowie die axiale Erstreckung T_{WA} der Bodenaufstandsfläche. Die eingetragene Umfangsrichtung U ist der Abrollrichtung des Fahrzeugluftreifens bei Vorwärtsfahrt am montierten Fahrzeug entgegengerichtet.

Das Laufflächenprofil ist mit einer in Figur 1 links dargestellten linken Schulterprofilblockreihe 1 ausgebildet, die sich über den gesamten Umfang des Fahrzeugluftreifens erstreckt und die in Umfangsrichtung U aus einer Vielzahl von in Umfangsrichtung U hintereinander angeordneten und jeweils durch eine Querrille 11 voneinander getrennten Profilblockelementen 6 ausgebildet ist. Durch eine über den gesamten Umfang des Fahrzeugluftreifens erstreckte Umfangsrille 16 ist axial von der Schulterprofilblockreihe 1 eine Profilblockreihe 12 getrennt ausgebildet, die sich über den gesamten Umfang des Fahrzeugluftreifens erstreckt und aus in Umfangsrichtung U hintereinander angeordneten und jeweils durch eine Querrille 12 voneinander getrennten Profilblockelementen 7 ausgebildet ist. Axial durch eine über den gesamten Umfang des Fahrzeugluftreifens erstreckte Umfangsrille 17 von der Profilblockreihe 2 getrennt ist eine über den gesamten Umfang des Fahrzeugluftreifens erstreckte Profilblockreihe 3 ausgebildet, die aus in Umfangsrichtung hintereinander angeordneten und jeweils durch Querrillen 13 voneinander getrennten Profilblockelementen 8 ausgebildet ist. Axial durch eine über den gesamten Umfang des Fahrzeugluftreifens erstreckte Umfangsrille 18 getrennt von der Profilblockreihe 3 ist eine über den gesamten Umfang des Fahrzeugluftreifens erstreckte Profilblockreihe 4 ausgebildet, die aus in Umfangsrichtung U hintereinander angeordneten und jeweils durch Querrillen 14 voneinander getrennten Profilblockelementen 9 ausgebildet ist. Axial durch eine über den gesamten Umfang des Fahrzeugluftreifens erstreckte Umfangsrille 19 von der Profilblockreihe 4 getrennt ist eine in der Figur 1 rechte Schulterprofilblockreihe 5 ausgebildet, die sich über den gesamten Umfang des Fahrzeugluftreifens erstreckt und die aus in Umfangsrichtung hintereinander angeordneten und jeweils durch Querrillen 15 voneinander getrennten Profilblockelementen 10 ausgebildet ist.

Die Querrillen 12 verbinden die Umfangsrillen 16 und 17, die Querrillen 13 verbinden die Umfangsrillen 17 und 18 und die Querrillen 14 verbinden die Umfangsrillen 18 und 19.

Die Bodenaufstandsfläche erstreckt sich in axialer Richtung A über das Erstreckungsmaß T_{WA} von der linken Schulterprofilblockreihe 1 bis zur rechten Schulterprofilblockreihe 5.

Die Figuren 2, 3 und 4 zeigen die Ausbildung eines Profilblockelementes 9 der Profilblockreihe 4 mit der das Profilblockelement in radialer Richtung R nach außen begrenzenden Mantelfläche 20, die die Bodenkontaktfläche des Profilblockelementes 9 bildet. Die das Profilblockelement 9 beim Durchlaufen des Reifenlatsches in Fahrtrichtung des Fahrzeugluftreifens bei Vorwärtsfahrt am montierten Fahrzeug (d. h. Abrollrichtung entgegen der eingetragenen Umfangsrichtung U) nach vom gerichtete Profilblockelementflanke 21, die gleichzeitig eine der beiden Rillenwände der angrenzenden Querrille 14 mit dem Rillengrund 25 bildet, ist in einem radial inneren ersten Erstreckungsbereich rᵢ, der sich ausgehend vom Rillengrund 25 nach radial außen erstreckt, mit einer ersten inneren unprofilierten glatten Fläche 22 ausgebildet. In einem zweiten radial äußeren Erstreckungsbereich rₐ ist die Profilblockelementflanke 21 und somit die Rillenwand im Anschluss an das radial äußere Erstreckungsende des ersten radial inneren Erstreckungsbereichs rᵢ in einer Schnittebene senkrecht zur Haupterstreckungsrichtung der Profilrille 14 gegenüber der Fläche 22 abgeknickt und mit einer unter Einschluss eines Winkels α zur Radialen R verlaufenden äußeren zweiten Fläche 24 ausgebildet, die sich bis zur radial äußeren Mantelfläche 20 erstreckt. Zwischen der radial äußeren Mantelfläche 20 und der zweiten Fläche 24 ist ebenso wie zwischen der zweiten Fläche 24 und der ersten Fläche 23 jeweils ein deutlich erkennbarer Knick in dem Querschnittsverlauf ausgebildet. Dies ist in Figur 4 zu erkennen.

Die in Radialer Richtung R des Fahrzeugluftreifens gemessene gesamte radiale Erstreckungshöhe r_{G} der radialen Erstreckung der Profilblockflanke 21- ausgehend vom Rillengrund bis zur Profilblockmantelfläche 9 - bildet somit die Summe der radialen Erstreckung rᵢ und der radialen Erstreckung rₐ, d.h. r_{G} = rᵢ + rₐ.

Der Winkel α ist so gewählt, das für ihn gilt 30° ≤ α ≤ 60°. In einer besonderen Ausführung ist α so gewählt, dass für ihn gilt 40° ≤ α ≤ 50°. In der dargestellten Ausführung ist α = 45° gewählt.

Das radial Maß rₐ der radialen Erstreckung des radial äußeren Erstreckungsbereichs 24 ist dabei so gewählt, dass rₐ < (0,5 r_{G}). In einer besonderen Ausführungsform ist rₐ so gewählt, dass rₐ < (0,3 r_{G}).

In einer besonderen Ausführungsform ist rₐ < 2 mm.

Wie in den Figuren 2, 3 und 4 zu erkennen ist, sind in radialer Richtung R äquidistant zueinander parallel zum Längserstreckungsverlauf der mit ihrer Rillenwand die Profilblockelementflanke 21 bildenden Querrille 14 mehrere parallele über das gesamte Profilblockelement 9 erstreckte Stufen 24 ausgebildet. Diese Stufen 24 bilden in dem radial äußeren Erstreckungsbereich 23 der Rillenwand 21 linienförmige parallel zur Querrille 14 ausgerichtete profilierte Erhebungen, die beim Durchlaufen von mit Schnee, Eis oder Nässe bedeckten Straßenoberflächen zusätzliche Griffkanten des Profilblockelements 9 bilden.

In einer nicht dargestellten Ausführungsform ist beiderseits des Rillengrundes einer Querrille 14 jeweils die die Rillenwand der Querrille bildende Flanke der durch die Querrille 14 voneinander getrennten Profilblockelemente 9 in dieser Weise aus radial innerer Fläche 22 und radial äußerer Fläche 23 mit abgeknicktem Übergang zwischen innerer Fläche 22 und äußerer Fläche 23 und parallel zur Rille ausgebildeter Linienprofilierung in der äußeren Fläche 23 ausgebildet.

In einer weiteren Ausführungsform sind auch die Profilblockelemente 8, 7, 6 und 10 der Profilblockreihen 1, 2, 3 und 5 mit einer analog ausgebildeten Profilierung ihrer zu den jeweiligen Querrillen 11, 12, 13 bzw. 15 ausgebildeten Flanken ausgebildet.

Figur 5 zeigt eine alternative Darstellung der radial äußeren Fläche 23. Dabei sind anstelle der Stufen 24 mehrere radial übereinander angeordnete längs der Erstreckungsrichtung der Profilrille 14 parallel ausgerichtete über das gesamte Profilblockelement 9 erstreckte Feineinschnitte 26 ausgebildet.

Figur 6 zeigt eine weitere alternative Ausführung. Bei dieser Ausführung sind die linienförmigen Erhebungen im Querschnitt nicht als stufenförmige Profilierungen 24, sondern als im Querschnitt zahnförmige Profilierungen 27 ausgebildet. Die zahnförmigen linienförmigen Erhebungen 27 sind - wie die im Zusammenhang mit den Figuren 3 bis 5 erläuterten stufenförmigen Erhebungen - ebenfalls jeweils parallel zur Querrille 14 über das gesamte Profilblockelement 9 erstreckt ausgebildet und bilden linienförmige Griffkanten.

In einer weiteren nicht dargestellten Ausführung sind Profilblockelemente einer oder mehrerer Profilblockreihen 1,2,3,4 und 5 jeweils auch an ihrer in axialer Richtung zur Fahrzeugaußenseite zu Umfangsrillen hin begrenzenden Profilblockelementflanken in analoger Weise aus radial innerer Fläche 22 und radial äußerer Fläche 23 mit abgeknicktem Übergang zwischen innerer Fläche 22 und äußerer Fläche 23 und parallel zur Umfangsrille ausgebildeter Linienprofilierung in der äußeren Fläche 23 ausgebildet.

In einer weiteren nicht dargestellten Ausführung sind Profilblockelemente einer oder mehrerer Profilblockreihen 1,2,3,4 und 5 jeweils auch an allen in axialer Richtung zu einer Umfangsrillen hin begrenzenden Profilblockelementflanken in analoger Weise aus radial innerer Fläche 22 und radial äußerer Fläche 23 mit abgeknicktem Übergang zwischen innerer Fläche 22 und äußerer Fläche 23 und parallel zur Umfangsrille ausgebildeter Linienprofilierung in der äußeren Fläche 23 ausgebildet.

### Bezugszeichenliste

### (Teil der Beschreibung)

- 1: Schulterprofilblockreihe
- 2: Profilblockreihe
- 3: Profilblockreihe
- 4: Profilblockreihe
- 5: Schulterprofilblockreihe
- 6: Profilblockelement
- 7: Profilblockelement
- 8: Profilblockelement
- 9: Profilblockelement
- 10: Profilblockelement
- 11: Querrille
- 12: Querrille
- 13: Querrille
- 14: Querrille
- 15: Querrille
- 16: Umfangsrille
- 17: Umfangsrille
- 18: Umfangsrille
- 19: Umfangsrille
- 20: Radial äußere Mantelfläche
- 21: Rillenwand
- 22: Radial innerer Erstreckungsbereich
- 23: Radial äußerer Erstreckungsbereich
- 24: Stufenförmige Profilierung
- 25: Rillengrund
- 26: Feineinschnitt
- 27: Zahnprofilierung

## Patentansprüche

1. Fahrzeugreifen mit profiliertem Laufstreifen mit durch Profilrillen voneinander getrennten radial erhabenen Profilelementen mit jeweils mindestens einer Rillenwand, die sich aus dem Rillengrund nach radial außen bis zu einer das Profilelement nach radial außen begrenzenden Mantelfläche erstreckt und eine Flanke eines an die Profilrille angrenzenden erhabenen Profilelementes bildet, wobei die Flanke einen radial inneren Erstreckungsbereich und einen radial äußeren Erstreckungsbereich aufweist, wobei jeweils in den Schnittebenen senkrecht zur Längserstreckungsrichtung der Profilrille der zwischen Rillenflanke und radialer Richtung eingeschlossene Winkel im radial äußeren Erstreckungsbereich größer ist als im radial inneren Erstreckungsbereich,
wobei im radial äußeren Erstreckungsbereich (23) linienförmige Profilierungen (24,26,27) ausgebildet sind, deren linienförmige Erstreckung im wesentlichen parallel zur Längserstreckung der Profilrille (14) ausgerichtet ist, und wobei im radial inneren Erstreckungsbereich (22) keine linienförmigen Profilierungen ausgebildet sind, deren linienförmige Erstreckung im wesentlichen parallel zur Längserstreckung der Profilrille ausgerichtet ist, **dadurch gekennzeichnet, dass** das Maß rₐ der radialen Erstreckung des radial äußeren Erstreckungsbereiches maximal 30% der gesamten radialen Erstreckung r_{G} der Rillenwand beträgt.

2. Fahrzeugreifen gemäß den Merkmalen von Anspruch 1,
dass beide eine Profilrille begrenzenden Rillenwände jeweils Profilelementflanken bilden, die mit einem radial inneren und einem radial äußeren Erstreckungsbereich ausgebildet sind, bei dem im radial äußeren Erstreckungsbereich jeweils linienfömige Profilierungen ausgebildet sind, deren linienförmige Erstreckung im wesentlichen parallel zur Längserstreckung der Profilrille ausgerichtet ist, und bei dem im radial inneren Erstreckungsbereich keine linienfömigen Profilierungen ausgebildet sind, deren linienförmige Erstreckung im wesentlichen parallel zur Längserstreckung der Profilrille ausgerichtet ist.

3. Fahrzeugreifen gemäß den Merkmalen von Anspruch 1 oder 2,
wobei der Übergang zwischen radial innerem und radial äußerem Erstreckungsbereich in den Schnittebenen senkrecht zur Längserstreckungsrichtung der Profilrille knickförming ausgebildet ist.

4. Fahrzeugreifen gemäß den Merkmalen von einem oder mehreren der vorangegangenen Ansprüche,
wobei die linienförmigen Profilierungen mehrere in radialer Richtung nebeneinander angeordnete parallele linienförmige Erhebungen und /oder Vertiefungen sind.

5. Fahrzeugreifen gemäß den Merkmalen von einem oder mehreren der vorangegangenen Ansprüche,
wobei die linienförmigen Profilierungen Rippen und/oder Stufen und/oder Rillen und/oder Feineinschnitte sind.

6. Fahrzeugreifen gemäß den Merkmalen von einem oder mehreren der vorangegangenen Ansprüche,
wobei der in den Schnittebenen senkrecht zur Längserstreckungsrichtung der Profilrille der zwischen Rillenflanke und radialer Richtung eingeschlossene Winkel α im radial äußeren Erstreckungsbereich größer oder gleich 30° und kleiner oder gleich 60° ist.

7. Fahrzeugreifen gemäß den Merkmalen von Anspruch 6,
wobei der in den Schnittebenen senkrecht zur Längserstreckungsrichtung der Profilrille der zwischen Rillenflanke und radialer Richtung eingeschlossene Winkel α im radial äußeren Erstreckungsbereich größer oder gleich 40° und kleiner oder gleich 50°, mit insbesondere α = 45° ist.

8. Fahrzeugreifen gemäß den Merkmalen von einem oder mehreren der vorangegangenen Ansprüche,
wobei das Maß rₐ der radialen Erstreckung des radial äußeren Erstreckungsbereiches maximal 2mm beträgt.

9. Fahrzeugreifen gemäß den Merkmalen von einem oder mehreren der vorangegangenen Ansprüche,
wobei die Profilrille eine im Wesentlichen in Umfangsrichtung über den Umfang des Fahrzeugreifens erstreckte Umfangsrille ist.

10. Fahrzeugreifen gemäß den Merkmalen von einem oder mehreren der vorangegangenen Ansprüche,
wobei die Profilrille eine Querrille ist.

## Claims

1. Vehicle tyre with a profiled tread rubber, with radially raised profile elements which are separated from one another by profile grooves and each have at least one groove wall which extends radially outwards from the groove base as far as a lateral surface delimiting the profile element radially outwards and forms a flank of a raised profile element adjacent to the profile groove, the flank having a radially inner range of extent and a radially outer range of extent, wherein, respectively in the sectional planes perpendicular to the direction of longitudinal extent of the profile groove, the angle enclosed between the groove flank and the radial direction is greater in the radially outer range of extent than in the radially inner range of extent, wherein linear profilings (24, 26, 27) of a linear extent which is aligned substantially parallel to the longitudinal extent of the profile groove (14) are formed in the radially outer range of extent (23), and wherein no linear profilings of a linear extent which is aligned substantially parallel to the longitudinal extent of the profile groove are formed in the radially inner range of extent (22), **characterized in that** the degree rₐ of radial extent of the radially outer range of extent is a maximum of 30% of the total radial extent r_{G} of the groove wall.

2. Vehicle tyre according to the features of Claim 1, **characterized in that** both groove walls delimiting a profile groove respectively form profile element flanks which are formed with a radially inner range of extent and a radially outer range of extent, in which linear profilings of a linear extent which is aligned substantially parallel to the longitudinal extent of the profile groove are respectively formed in the radially outer range of extent, and in which no linear profilings of a linear extent which is aligned substantially parallel to the longitudinal extent of the profile groove are formed in the radially inner range of extent.

3. Vehicle tyre according to the features of Claim 1 2, the transition between the radially inner range of extent and the radially outer range of extent in the sectional planes perpendicular to the direction of longitudinal extent of the profile groove being formed in a kinked manner.

4. Vehicle tyre according to the features of one or more of the preceding claims, the linear profilings being a number of parallel linear elevations and/or depressions arranged next to one another in the radial direction.

5. Vehicle tyre according to the features of one or more of the preceding claims, the linear profilings being ribs and/or steps and/or grooves and/or sipes.

6. Vehicle tyre according to the features of one or more of the preceding claims, wherein, in the sectional planes perpendicular to the direction of longitudinal extent of the profile groove, the angle α enclosed between the groove flank and the radial direction is greater than or equal to 30° and less than or equal to 60° in the radially outer range of extent.

7. Vehicle tyre according to the features of Claim 6, wherein, in the sectional planes perpendicular to the direction of longitudinal extent of the profile groove, the angle α, enclosed between the groove flank and the radial direction is greater than or equal to 40° and less than or equal to 50°, with in particular α = 45°, in the radially outer range of extent.

8. Vehicle tyre according to the features of one or more of the preceding claims, the degree rₐ of radial extent of the radially outer range of extent being a maximum of 2 mm.

9. Vehicle tyre according to the features of one or more of the preceding claims, the profile groove being a circumferential groove made to extend substantially in the circumferential direction over the circumference of the vehicle tyre.

10. Vehicle tyre according to the features of one or more of the preceding claims, the profile groove being a transverse groove.

## Revendications

1. Bandage pour roue de véhicule, présentant une bande de roulement profilée dotée d'éléments profilés débordant radialement et séparés les uns des autres par des rainures profilées, chacun de ces éléments profilés étant doté d'au moins une paroi de rainure qui s'étend depuis le fond de la rainure dans la direction radiale et vers l'extérieur jusqu'à une surface d'enveloppe qui délimite l'élément profilé radialement vers l'extérieur et qui forme le flanc d'un élément profilé en relief adjacent à la rainure profilée, le flanc présentant une partie d'extension radialement intérieure et une partie d'extension radialement extérieure, l'angle inclus dans les plans de coupe perpendiculaires à la direction d'extension longitudinale de la rainure profilée entre le flanc de rainure et la direction radiale étant plus grand dans la partie d'extension radialement extérieure que dans la partie d'extension radialement intérieure,
des profilations (24, 26, 27) linéaires dont l'extension linéaire est orientée essentiellement en parallèle à l'extension longitudinale de la rainure profilée (14) étant formées dans la partie (23) d'extension radialement extérieure et aucune profilation linéaire dont l'extension linéaire est orientée essentiellement en parallèle à l'extension longitudinale de la rainure profilée n'étant formée dans la partie (22) d'extension radialement intérieure, **caractérisé en ce que**
la dimension rₐ de l'extension radiale de la partie d'extension radialement extérieur représente au plus 30 % de l'extension radiale totale r_{G} de la paroi de la rainure.

2. Bandage pour roue de véhicule selon les caractéristiques de la revendication 1, **caractérisé en ce que** chacune des deux parois délimitant une rainure profilée forme des flancs d'éléments profilés qui sont configurés avec une partie d'extension radialement intérieure et une partie d'extension radialement extérieure, **en ce que** des profilations linéaires dont l'extension linéaire est orientée essentiellement en parallèle à l'extension longitudinale de la rainure profilée sont formées dans chacune des parties d'extension radialement extérieures et
**en ce qu'**aucune profilation linéaire dont l'extension linéaire est orientée essentiellement en parallèle à l'extension longitudinale de la rainure profilée n'est formée dans la partie d'extension radialement intérieure.

3. Bandage pour roue de véhicule selon les caractéristiques des revendications 1 ou 2, dans lequel la transition entre la partie d'extension radialement intérieure et la partie d'extension radialement extérieure a la forme d'un coude dans un plan de coupe perpendiculaire à la direction d'extension longitudinale de la rainure profilée.

4. Bandage pour roue de véhicule selon les caractéristiques d'une ou plusieurs de revendications précédentes, dans lequel les profilations linéaires sont plusieurs reliefs et/ou creux linéaires parallèles disposés les uns à côté des autres dans la direction radiale.

5. Bandage pour roue de véhicule selon les caractéristiques d'une ou plusieurs de revendications précédentes, dans lequel les profilations linéaires sont des nervures, des gradins, des rainures et/ou de fines entailles.

6. Bandage pour roue de véhicule selon les caractéristiques d'une ou plusieurs de revendications précédentes, dans lequel l'angle α inclus entre le flanc de rainure et la direction radiale dans les plans de coupe perpendiculaires à la direction d'extension longitudinale de la rainure profilée est supérieur ou égal à 30° et inférieur ou égal à 60° dans la partie d'extension radialement extérieure.

7. Bandage pour roue de véhicule selon les caractéristiques d'une ou plusieurs de revendications précédentes, de la revendication 6, dans lequel l'angle α inclus entre le flanc de rainure et la direction radiale dans les plans de coupe perpendiculaires à la direction d'extension longitudinale de la rainure profilée est supérieur ou égal à 40° et inférieur ou égal à 50°, et en particulier α = 45°, dans la partie d'extension radialement extérieure.

8. Bandage pour roue de véhicule selon les caractéristiques d'une ou plusieurs de revendications précédentes, dans lequel la dimension rₐ de l'extension radiale de la partie d'extension radialement extérieure est d'au plus 2 mm.

9. Bandage pour roue de véhicule selon les caractéristiques d'une ou plusieurs de revendications précédentes, dans lequel la rainure profilée est une rainure périphérique qui s'étend essentiellement dans la direction périphérique sur toute la périphérie du bandage pour roue de véhicule.

10. Bandage pour roue de véhicule selon les caractéristiques d'une ou plusieurs de revendications précédentes, dans lequel la rainure profilée est une rainure transversale.
